# EUROPÄISCHE PATENTANMELDUNG

(11) **EP 0 721 805 A2**
(43) Veröffentlichungstag der Anmeldung: **17.07.1996**
(21) Anmeldenummer: 96100030.4
(22) Anmeldetag: 03.01.1996
(51) Int. Cl.: B05C 17/00, B65D 81/32, B29B 7/74, B01F 13/00

(54) **Vorrichtung zum Mischen und Ausbringen einer Formmasse**

(30) Priorität: 13.01.1995 DE 19500782
(71) Anmelder: BAYER AG, 51368 Leverkusen (DE)
(72) Erfinder: Müller, Hans-Helmut, D-51109 Köln (DE); Diederich, Reiner, D-50389 Wesseling (DE); von Schuckmann, Alfred, D-47627 Kevelaer (DE); Mengel, Otto, D-50859 Köln (DE)

(57) **Zusammenfassung**

Die Vorrichtung zum Mischen und Ausbringen einer selbsthärtenden Zweikomponenten-Formmasse besteht aus einer Zweikolben-Mischpistole mit einem Pistolenkörper 1 und einem Aufnahmeschacht 4 für 2 mit den Einzelkomponenten der Formmasse gefüllten Kartuschen 11a, 11b und einem sich an dem Aufnahmeschacht 4 anschließenden statischen Mischer 6 mit einer Austrittsdüse 7. Dabei bestehen die Kartuschen 11a, 11b aus getrennten Kartonhülsen 22, die jeweils mit einer Abschlußplatte 23 und einem Kolbenelement 24 versehen sind. Die Kartonhülsen werden in den Aufnahmeschacht 4 gebracht, der mit einem druckfesten, die Kartonhülsen 22 bündig umfassenden Kartuschengehäuse 5 verschließbar ist. Ferner ist zwischen dem statischen Mischer 6 und den Kartonhülsen 22 ein in den Aufnahmeschacht 4 einsetzbares Kopfstück 16 vorgesehen, das getrennte, zu den Kartonhülsen 22 hin offene Strömungskanäle 28a, 28b aufweist, die sich unmittelbar am Eintritt in den statischen Mischer 6 vereinigen.

## Beschreibung

Die Erfindung geht aus von einer Vorrichtung zum Mischen und Ausbringen einer selbsthärtenden Zweikomponenten-Formmasse. Die wesentlichen Bestandteile dieser Vorrichtung sind eine Zweikolben-Mischpistole mit einem Pistolenkörper und einem Aufnahmeschacht für zwei mit den Einzelkomponenten der Zweikomponenten-Formmassen gefüllte Kartuschen und einem sich an den Aufnahmeschacht anschließenden statischen Mischer mit einer Austrittsdüse. Derartige Zweikomponenten-Austrageinrichtungen sind z.B. in EP 121 342 und EP 232 733 beschrieben. Hauptanwendungsgebiete dieser Austrageinrichtungen sind die problemlose und saubere Verarbeitung von 2K-Klebern, Fugendichtmassen und Isolierschäumen. Ferner werden Mischsysteme dieser Art zur sauberen und ergonomischen Bereitstellung von dentalen Abformmaterialien in der zahnärztlichen Praxis eingesetzt. Zu diesem Zweck werden die beiden miteinander zu vermischenden Komponenten der Abformmasse in sogenannten Zweikomponenten-Kunststoffkartuschen geliefert. Diese Doppelkartuschen werden in die Mischpistole eingelegt und arretiert. Durch Betätigung des Pistolenhandgriffs wird ein Doppelkolben betätigt, der die in den beiden Kartuschenzylindern befindlichen Komponenten gleichzeitig auspreßt und in einen am Kopfende angesetzten statischen Mischer fördert. Die Zweikomponentenmischung tritt dann aus einer Düse am Mischerende aus und kann in dieser Form appliziert werden. Nach dem Entleeren wird die Kunststoff-Doppelkartusche einschließlich Verschluß als Abfall verworfen und muß entsorgt werden. Bei diesem Mischsystem steht von der Zielsetzung her gesehen die besonders einfache und betriebssichere Handhabung im Vordergrund.

Der Erfindung liegt demgegenüber die Aufgabe zugrunde, ein preisgünstiges, umweltfreundliches und Abfall-optimiertes Mischsystem für Zweikomponentenmaterialien zu entwickeln.

Diese Aufgabe wird ausgehend von der eingangs beschriebenen Vorrichtung zum Mischen und Ausbringen einer selbsthärtenden Zweikomponenten-Formmasse erfindungsgemäß dadurch gelöst
a) daß die Kartuschen aus getrennten Kartonhülsen bestehen, die jeweils mit einer Abschlußplatte und einem Kolbenelement versehen sind
b) daß der Aufnahmeschacht mit einem druckfesten, die Kartonhülsen bündig umfassenden Kartuschengehäuse verschließbar ist und
c) daß ein zwischen dem statischen Mischer und den Kartonhülsen in den Aufnahmeschacht einsetzbares Kopfstück vorgesehen ist, das getrennte, zu den Kartonhülsen hin offene Strömungskanäle aufweist, die sich unmittelbar am Eintritt in den statischen Mischer vereinigen.

Vorteilhaft ist an dem Mischpistolenkörper ein Kupplungssteg angebracht, der beim Schließen des Kartuschengehäuses den Pistolenkörper kraftschlüssig mit dem Kartuschengehäuse verriegelt.

Vorzugsweise ist das Kartuschengehäuse mit Hilfe von Scharnieren schwenkbar am Aufnahmeschacht befestigt und kann somit in einfacher Weise auf- oder zugeklappt werden.

Eine weitere bevorzugte Ausführungsform besteht darin, daß die Kartonhülsen mit durchstechbaren Abschlußplatten versehen sind und daß zum Durchstechen der Abschlußplatten am Kopfstück mit den Strömungskanälen verbundene, mit ihren Spitzen zu den Kartonhülsen hin orientierte Hohldorne angebracht sind.

Aus Gründen der Lagerbeständigkeit sind die Kartonhülsen zweckmäßig an ihrer Innenseite mit einer gegenüber den Einzelkomponenten der Zweikomponenten-Formmasse resistenten Folie kaschiert.

Mit der Erfindung werden folgende Vorteile erzielt:

### 1. Für den Hersteller

a) es können erhebliche Einsparungen bei den Packmittelkosten und Entsorgungskosten erzielt werden;
b) es kann ohne weiteres mit variablen Abfüllmengen in den Kartonhülsen gearbeitet werden;
c) die Produktionskosten können ebenfalls gesenkt werden, da eine Einzelbefüllung der Kartuschen möglich ist und die zur Synchronbefüllung notwendigen teuren Abfüllmaschinen nicht mehr benötigt werden.

### 2. Für den Anwender

a) mit der Erfindung wird ein nachfüllbares Mischsystem bereitgestellt;
b) bereits vorhandene Mischpistolen können mit der erfindungsgemäßen Vorrichtung ohne weiteres nachgerüstet werden;
c) in der zahnärztlichen Praxis kann eine erhebliche Abfallreduzierung erreicht werden;
d) das neue Mischsystem bietet ebenfalls ein einfaches und sauberes Handling;
f) die meisten Teile des Mischsystems sind wiederverwendbar; eine Teilentleerung der Kartonhülsen ist ohne weiteres möglich;
g) mit den Kartonhülsen wird eine bruchsichere Verpackung bereitgestellt, so daß Schäden beim Handling oder beim Transport minimiert werden können.

Im folgenden wird die Erfindung anhand eines in der Zeichnung dargestellten Ausführungsbeispieles näher erläutert. Es zeigen:
- Fig.1: die komplette zusammengebaute Zweikomponenten-Mischpistole in perspektivischer Darstellung;
- Fig. 2: eine Explosionszeichnung der Zweikolben-Mischpistole in perspektivischer Darstellung;
- Fig. 3: eine weitere Explosionszeichnung der Zweikomponenten-Mischpistole mit Aufnahmeschacht und Kartuschengehäuse und dem Kupplungssteg zur Verbindung des Kartuschengehäuses mit dem Pistolenkörper;
- Fig. 4: eine perspektivische Explosionszeichnung einer Kartonhülse mit Abschlußdeckel und Kolben;
- Fig. 5: eine perspektivischen Darstellung des in den Aufnahmeschacht einsetzbaren Kopfstücks zum Anschluß des statischen Mischers;
- Fig. 6: eine perspektivische Schnittzeichnung des Kopfstücks.

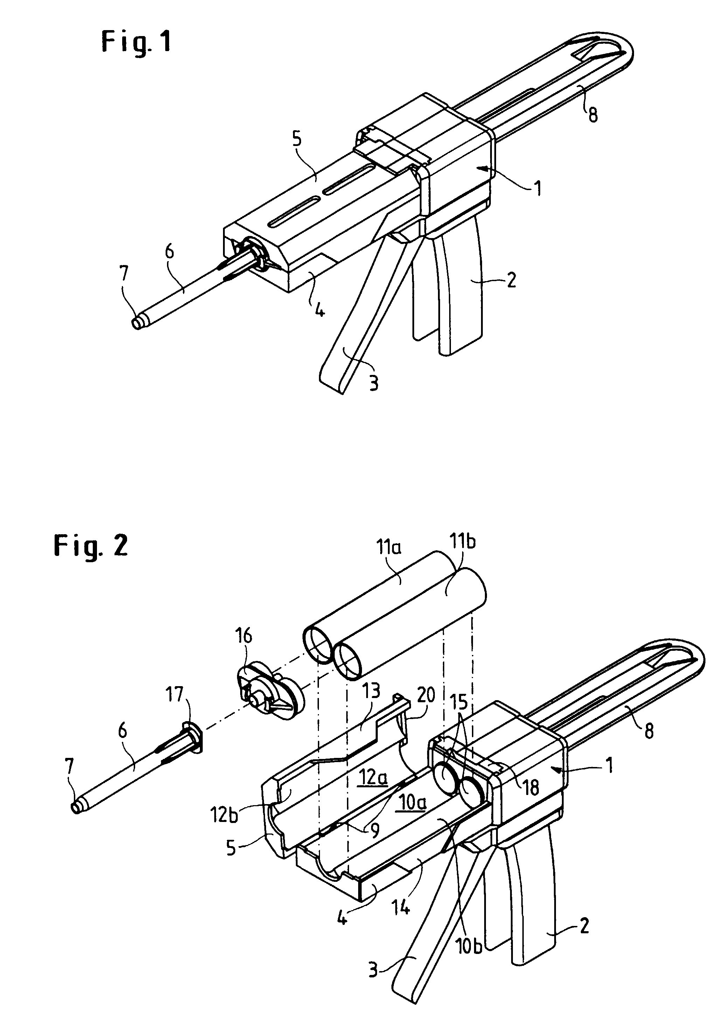

Die Zweikolben-Mischpistole gemäß Fig. 1 besteht aus einem Pistolenkörper 1 mit einem feststehenden Handgriff 2 und einem Auslösehebel 3, einem Aufnahmeschacht 4 mit einem aufklappbaren Kartuschengehäuse 5, einem an den Aufnahmeschacht 4 angesetzten statischen Mischer 6 mit einer Austrittsdüse 7, sowie einer aus dem Pistolenkörper 1 herausragenden Doppelkolbenstange 8. Der Aufnahmeschacht 4 ist mit dem Pistolenkörper 1 fest verbunden.

Aus Fig. 2 ist ersichtlich, daß das Kartuschengehäuse mittels der Scharniere 9 am Aufnahmeschacht 4 befestigt ist und auf- bzw. zugeklappt werden kann. Im Aufnahmeschacht 4 sind halbzylindrische Aussparungen 10a und 10b zur Aufnahme von Einzelkartuschen 11a und 11b vorgesehen. Ähnliche halbzylindrische Aussparungen 12a und 12b weist auch das Kartuschengehäuse 5 auf, so daß die Kartuschen 11a und 11b kraftschlüssig und fest vom Aufnahmeschacht 4 und dem Kartuschengehäuse 5 eingeschlossen sind, wenn das Gehäuse 5 zugeklappt ist. Das Kartuschengehäuse 5 weist ferner einen trapezförmigen Steg 13 auf, der in einer entsprechend geformter Aussparung 14 am Aufnahmeschacht 4 einrasten kann und einen Schnappverschluß bildet. Am vorderen Ende der Doppelkolbenstange 8 sind die Kolben 15 angebracht, die beim Vortrieb der Kolbenstange 8 in die Einzelkartuschen 11a und 11b eingefahren werden. Die halbzylindrischen Aussparungen 10a, 10b im Aufnahmeschacht 4 und 12a, 12b im Gehäuse 5 sind mit ihrem Durchmesser so auf den Außendurchmesser der Einzelkartuschen 11a, 11b abgestimmt, daß die Kartuschen mit ihrer Oberfläche bündig an die Innenoberflächen der Aussparungen angrenzen. Auf diese Weise wird der beim Vortrieb der Kolben 15 auf den Kartuscheninhalt ausgeübte hohe Druck durch den Aufnahmeschacht 4 und das Gehäuse 5 aufgefangen. Der Vortrieb der Kolben 15 erfolgt durch einen mit dem Auslösehebel 3 gekoppelten zum Stand der Technik gehörenden Zahnstangenantrieb (nicht dargestellt).

Zwischen dem statischen Mischer 6 und den Einzelkartuschen 11a und 11b ist ein in den Aufnahmeschacht 4 einsetzbares Kopfstück 16 vorgesehen. Das Kopfstück 16 bildet das Verbindungsstück zwischen den Einzelkartuschen 11a und 11b und dem statischen Mischer 6 und wird weiter unten noch näher beschrieben. Der statische Mischer 6 kann mittels eines Steckflansches 17 an dem Kopfstück 16 befestigt werden.

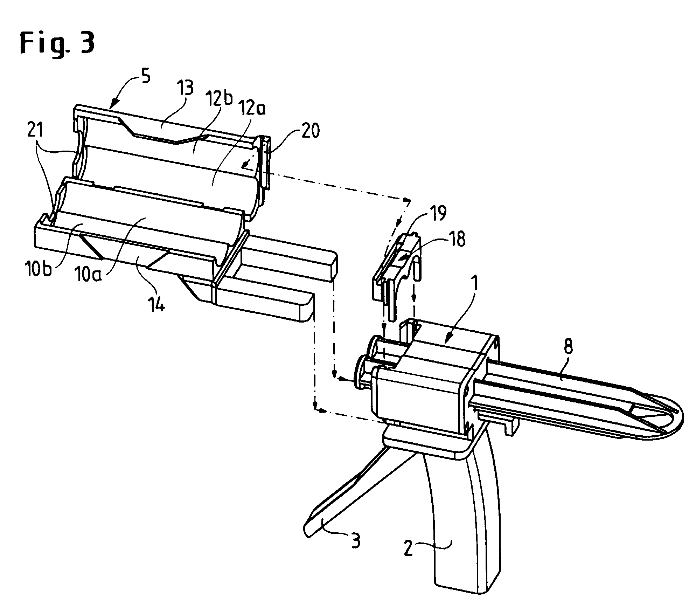

In Fig. 3 ist der Aufnahmeschacht 4 mit dem aufklappbaren Gehäuse 5 in Kombination mit einem Kupplungssteg 18 zur kraftschlüssigen Verbindung des Kartuschengehäuses 5 mit dem Pistolenkörper 1 (in Form einer Explosionszeichnung) dargestellt. Der Kupplungssteg 18 kann in eine entsprechende Aussparung am Pistolenkörper 1 eingeschoben werden und ist dann fest mit dem Pistolenkörper verbunden. Der Kupplungssteg 18 weist eine Quernut 19 auf, die so ausgebildet ist, daß ein hakenförmiger Bügel 20 am Kartuschengehäuse 5 in die Nut 19 eingreift, wenn das Kartuschengehäuse 5 zugeklappt ist. Auf diese Weise wird beim Schließen des Kartuschengehäuses 5 der Pistolenkörper 1 kraftschlüssig mit dem Kartuschengehäuse 5 verriegelt. Um den Mischer 6 (siehe Fig. 2) am Kopfstück 16 anbringen zu können, sind am Aufnahmeschacht 4 und am Kartuschengehäuse 5 halbkreisförmige komplementäre Öffnungen 21 vorgesehen.

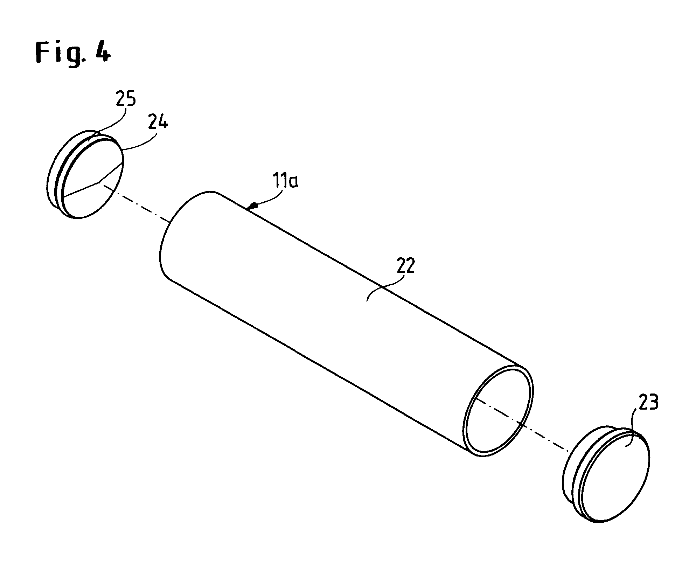

Die in Fig. 4 dargestellte Einzelkartusche 11a bzw. 11b besteht aus einer zylindrischen Kartonhülse 22 mit einem Abschlußdeckel 23 und einer Kolbenplatte 24. Die Kolbenplatte 24 die mit einer O-Ringdichtung 25 oder mit angespritzten Dichtlippen versehen ist, schließt bündig mit der Innenwand der Kartonhülse 22 ab und wird bei Betätigung des Auslösehebels 3 und entsprechendem Vortrieb der Kolben 15 (siehe Fig. 2) durch die Kartonhülse 22 geschoben. Die Wandstärke der Kartonhülse 22 beträgt 0,8 bis 1,8 mm. An ihrer Innenseite ist die Kartonhülse 22 mit einer gegenüber den Einzelkomponenten der Zweikomponenten-Formmasse resistenten Folie kaschiert. Die Kaschierung kann aus einer Pergament-, Aluminium- oder Polypropylenfolie bestehen.

Anstelle eines Abschlußdeckels 23 kann auch ein Folienverschluß für die Kartonhülse 22 vorgesehen werden; d.h. die Öffnung auf der der Kolbenplatte 25 gegenüberliegenden Seite ist dann mit einer Folie verschlossen.

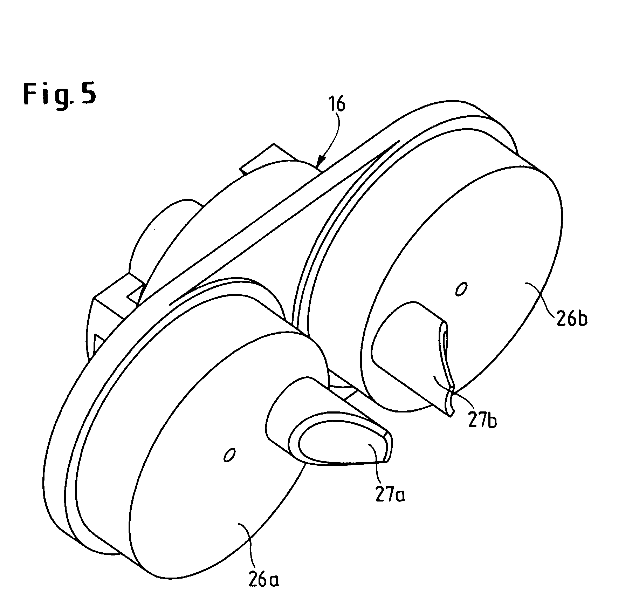

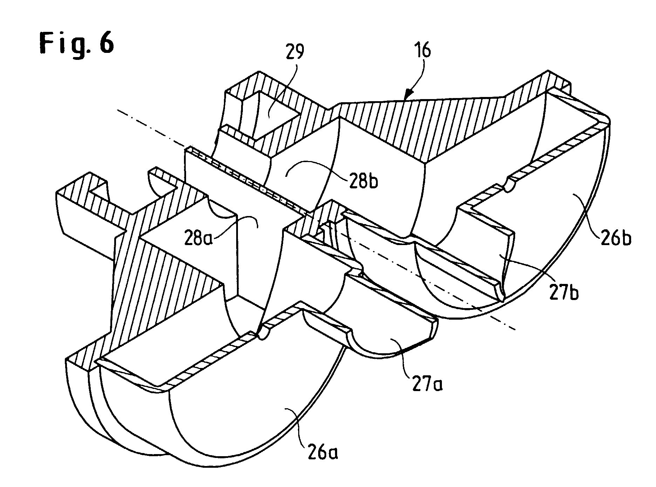

In den Fig. 5 und 6 ist das Kopfstück 16 (vergl. Fig. 2) dargestellt, das die aus den Kartonhülsen 22 bestehenden Einzelkartuschen 11a und 11b mit dem statischen Mischer 6 verbindet. Aus diesem Grund kann das Kopfstück auch als Dualadapter bezeichnet werden. Das Kopfstück 16 (Dualadapter) weist 2 kreiszylindrische Fortsätze 26a, 26b auf, deren Durchmesser dem Innendurchmesser der Kartonhülsen 22 angepaßt ist. An den zylindrischen Fortsätzen 26a, 26b sind Hohldorne 27a, 27b angeformt. Sofern die Kartonhülsen 22, wie oben beschrieben, mit einer Folie verschlossen sind, wird diese Folie beim Einsetzen des Kopfstücks 16 in den Aufnahmeschacht 4 von den Hohldornen 27a, 27b durchstoßen und die zylindrischen Fortsätze 26a und 26b am Kopfstück bilden den Abschluß der Kartonhülsen 22. Der Dualadapter 16 sorgt auch für den festen Zusammenschluß der mit den Einzelkomponenten gefüllten Kartonhülsen 22. Beim Einsetzen des Dualadapters werden zuerst durch die zylindrischen Fortsätze 26a und 26b die beiden Kartonhülsen abgedichtet. Bei weiterem mechanischen Druck werden die den Hohldornen 27a, 27b gegenüberstehenden Folienverschlüsse an den Kartonhülsen durchstoßen, so daß die in den Kartonhülsen befindlichen pastösen Einzelprodukte in die Hohldorne 27a, 27b eintreten können. Die beiden aus den Kartonhülsen bestehenden Einzelkartuschen 11a, 11b werden durch den Dualadapter 16 mechanisch arretiert. Auf der den Hohldornen 27a, 27b gegenüberliegenden Seite können handelsübliche statische Mischer 6 an den Dualadapter 16 angeschlossen werden. Zu diesem Zweck ist die Steckflanschverbindung 17 am statischen Mischer 6 vorgesehen. Ein wichtiges Merkmal des Dualadapters 16 ist die getrennte Produktführung aus den Kartonhülsen 22 bis zum Eintritt in den statischen Mischer 6. Zu diesem Zweck sind in das Kopfstück 16 getrennte, mit den Hohldornen 27a, 27b verbundene Strömungskanäle 28a, 28b eingearbeitet (siehe Fig. 6). Dadurch wird sichergestellt, daß sich die Einzelkomponenten nicht vor dem Eintritt in den statischen Mischer 6 miteinander vermischen können. In Fig. 6 ist ferner die zur Flanschverbindung 17 am statischen Mischer 6 (siehe Fig. 2) gehörende Flanschaussparung 29 angedeutet.

Im folgenden soll noch einmal zusammenfassend die Funktion der Zweikolben-Mischpistole beschrieben werden. Die mit den Einzelkomponenten gefüllten, noch verschlossenen (Abschlußdeckel 23 oder gleichwirkende Folienverschlüsse) Kartonhülsen 22 werden als erstes in den Aufnahmeschacht 4 eingelegt. Anschließend wird das Kopfstück bzw. der Dualadapter 16 in den Aufnahmeschacht 4 eingesetzt und gegen die aus den Kartonhülsen 22 bestehenden Einzelkartuschen 11a, 11b gedrückt (siehe Fig. 2). Dabei wird der Folienverschluß, wie oben beschrieben, geöffnet. Danach wird das Kartuschengehäuse 5 zugeklappt und verschlossen. Anschließend kann der statische Mischer 6 mittels der Flanschverbindung 17 auf das aus dem Aufnahmeschacht 4 bzw. dem Kartuschengehäuse 5 herausragende Vorderteil des Kopfstücks 16 aufgesetzt werden. Das Gerät ist nunmehr betriebsbereit. Nach dem Ausbringen des gesamten Kartuscheninhalts, d.h. wenn die Kartonhülsenkartuschen 11a, 11b leer sind, wird der Aufnahmeschacht 4 wieder mit neuen gefüllten Einzelkartuschen bestückt.

## Patentansprüche

1. Vorrichtung zum Mischen und Ausbringen einer selbsthärtenden Zweikomponenten-Formmasse, bestehend aus einer Zweikolben-Mischpistole mit einem Pistolenkörper (1) und einem Aufnahmeschacht (4) für zwei mit den Einzelkomponenten der Zweikomponenten-Formmasse gefüllte Kartuschen (11a,11b) und einem sich an den Aufnahmeschacht (4) anschließenden statischen Mischer (6) mit einer Austrittsdüse (7), dadurch gekennzeichnet,
a) daß die Kartuschen (11a, 11b) aus getrennten Kartonhülsen (22) bestehen, die jeweils mit einer Abschlußplatte (23) und einem Kolbenelement (24) versehen sind,
b) daß der Aufnahmeschacht (4) mit einem druckfesten, die Kartonhülsen (22) bündig umfassenden Kartuschengehäuse (5) verschließbar ist und
c) daß ein zwischen dem statischen Mischer (6) und den Kartonhülsen (22) in den Aufnahmeschacht (4) einsetzbares Kopfstück (Dualadapter) (16) vorgesehen ist, das getrennte, zu den Kartonhülsen (22) hin offene Strömungskanäle (28a, 28b) aufweist, die sich unmittelbar am Eintritt in den statischen Mischer (6) vereinigen.

2. Vorrichtung nach Anspruch 1, dadurch gekennzeichnet, daß der Pistolenkörper (1) einen Kupplungssteg (18) aufweist, der beim Schließen des Kartuschengehäuses (5) den Pistolenkörper (1) kraftschlüssig mit dem Kartuschengehäuse (5) verriegelt.

3. Vorrichtung nach Ansprüchen 1 und 2, dadurch gekennzeichnet, daß das Kartuschengehäuse (5) mit Hilfe von Scharnieren (9) schwenkbar am Aufnahmeschacht (4) befestigt ist.

4. Vorrichtung nach Ansprüchen 1 bis 3, dadurch gekennzeichnet, daß die Kartonhülsen (22) mit durchstechbaren Abschlußplatten oder -folien versehen sind und daß zum Durchstechen der Abschlußplatten bzw. -folien am Kopfstück mit den Strömungskanälen (28a, 28b) verbundene, mit ihren Spitzen zu den Kartonhülsen (22) hin orientierte Hohldorne (27a, 27b) angebracht sind.

5. Vorrichtung nach Ansprüchen 1 bis 4, dadurch gekennzeichnet, daß die Kartonhülsen (22) an ihrer Innenseite mit einer gegenüber den Einzelkomponenten der Zweikomponenten-Formmasse resistenten Folie kaschiert sind.
